# EUROPÄISCHE PATENTSCHRIFT

(11) **EP 1 323 305 B1**
(45) Veröffentlichungstag und Bekanntmachung des Hinweises auf die Patenterteilung: **30.08.2006**
(21) Anmeldenummer: 01964796.5
(22) Anmeldetag: 18.09.2001
(51) Int. Cl.: H04N 5/64, G06F 1/16

(54) **MULTIMEDIA-WIEDERGABEGERAET MIT EINER FLACHANZEIGE**
MULTIMEDIA PLAYBACK UNIT HAVING A FLAT DISPLAY
APPAREIL DE REPRODUCTION MULTIMEDIA A ECRAN PLAT

(30) Priorität: 25.09.2000 CH 187400
(43) Veröffentlichungstag der Anmeldung: 02.07.2003
(73) Patentinhaber: Dicom AG, 6343 Rotkreuz (CH)
(72) Erfinder: BIERI, Martin, CH-4539 Rumisberg (CH)
(74) Vertreter: Rutz & Partner
(86) Internationale Anmeldenummer: PCT/CH2001/000564
(87) Internationale Veröffentlichungsnummer: WO 2002/025943

(56) Entgegenhaltungen:
- EP-A- 0 830 020
- PATENT ABSTRACTS OF JAPAN vol. 1995, no. 09, 31. Oktober 1995 (1995-10-31) & JP 07 162784 A (SEIKO EPSON CORP), 23. Juni 1995 (1995-06-23)
- PATENT ABSTRACTS OF JAPAN vol. 1998, no. 13, 30. November 1998 (1998-11-30) & JP 10 222244 A (HITACHI LTD), 21. August 1998 (1998-08-21) & US 6 188 569 B1 (MINEMOTO ) 13. Februar 2001 (2001-02-13)

## Beschreibung

Die vorliegende Erfindung betrifft ein Fernsehgerät mit einer Flachanzeige, zum Beispiel mit einer Plasma- oder TFT-Anzeige, insbesondere ein flaches Fernsehgerät, das für die Montage an eine Wand bestimmt ist. Es wird verwiesen auf JP-A-07162784 in PAJ vol. 1995 no.09,31 oktober 1995 und JP-A10222244 mit US-A-6188569 als stand der Technik für Multimedia-wiedergabegerät

Es sind schon Flachanzeigen bekannt, die unter anderem in Computern und Fernsehgeräten verwendet werden. Insbesondere Plasma-Anzeigen werden häufig für Fernsehgeräte verwendet, da mit dieser Technologie auch sehr grosse Bildschirme, unter anderem Bildschirme mit einer Diagonale von über 70cm, hergestellt werden können. Solche grosse Bildschirme sind unter anderem als Heimfernsehgeräte sehr beliebt.

Viele Konsumenten wollen mit einem Fernsehgerät nicht nur Fernseh-Sendungen empfangen können, sondern auch Computerspiele durchführen, DVD's wiedergeben und auf das Internet zugreifen können. Für jede solche Anwendung muss in der Regel ein neues externes Gerät erworben werden, das über ein spezielles Kabel mit dem Fernsehgerät verbunden wird. Diese Lösung erweist sich jedoch als teuer und beansprucht viel Platz, weil mindestens zwei verschiedene Geräte mit zwei Gehäusen und zwei Netzteilen vorgesehen werden müssen. Ausserdem entstehen schwer zu lösende Probleme für das Design; insbesondere wenn das Fernsehgerät ein an die Wand montiertes Flachgerät ist, wird die Kabelverbindung zwischen den zusätzlichen Geräten und dem Fernsehgerät als sehr unästhetisch empfunden.

Fernsehgeräte mit einem integrierten Rechner, der für zusätzliche Anwendungen verwendet werden kann, sind auch schon bekannt. Der Rechner ist jedoch in der Regel nicht kompatibel mit standardisierten PC-Rechnern. Insbesondere sind die manchmal in Fernsehgeräte installierten Rechner kaum erweiterbar und verfügen zum Beispiel nicht über Slots für standardisierte Erweiterungskarten, wie sie üblicherweise in PC-Rechnern verwendet werden. Vor allem in Flachanzeige-Fernsehgeräten, die beispielsweise dazu bestimmt sind, an eine Wand montiert zu werden, können keine zusätzlichen PC-Erweiterungskarten installiert werden.

Es ist daher ein Ziel dieser Erfindung, ein Fernsehgerät mit einer Plasma-Anzeige vorzuschlagen, bei welchem diese Nachteile vermieden werden können.

Gemäss der vorliegenden Erfindung werden diese Ziele insbesondere durch die Merkmale der unabhängigen Ansprüche 1, 11 bis 12 erreicht. Weitere vorteilhafte Ausführungsformen gehen ausserdem aus den abhängigen Ansprüchen und der Beschreibung hervor.

Insbesondere werden diese Ziele der Erfindung dadurch erreicht, dass ein Multimedia-Wiedergabegerät mit einer Plasma-Anzeige, einem PC mit einer Vielzahl von Slots für Erweiterungskarten, mindestens einem Lautsprecher und einem flachen Gehäuse so konzipiert wird, dass die Mutterkarte des PC's parallel hinter der benannten Anzeige montiert ist, und dass die benannten Slots so montiert sind, dass sich die Erweiterungskarten parallel zur benannten Mutterkarte und hinter der benannten Anzeige befinden.

Dies hat unter anderem den Vorteil, dass der gesamte PC einschliesslich PCI- oder ISA Erweiterungskarten nur eine geringe Tiefe beansprucht, hingegen die grosse Fläche, die hinter der Plasma-Anzeige zur Verfügung steht, optimal verwendet.

Ein weiterer Vorteil ist, dass die Erweiterungskarten einfach montiert oder ersetzt werden können, ohne dass das gesamte Gehäuse des Fernsehgeräts geöffnet werden muss.

Diese Anordnung erlaubt ausserdem, alle Stecker der Mutterkarte sowie von den Erweiterungskarten im Multimedia-Wiedergabegerät, die ausserhalb des Geräts zugänglich sind, nebeneinander anzuordnen.

lm folgenden werden anhand der beigefügten Zeichnungen bevorzugte Ausführungsbeispiele der Erfindung näher beschrieben. Es zeigen:
Die Figur 1 eine perspektivische Darstellung eines Multimedia-Wiedergabegeräts mit der herausklappbaren Türe in geschlossener Position.
Die Figur 2 eine perspektivische Darstellung eines Teils des Gehäuses und der Mutterkarte des PC's.
Die Figur 3 eine Sicht von Hinten auf die benannte Mutterkarte und auf eine Erweiterungskarte im benannten Gehäuse.

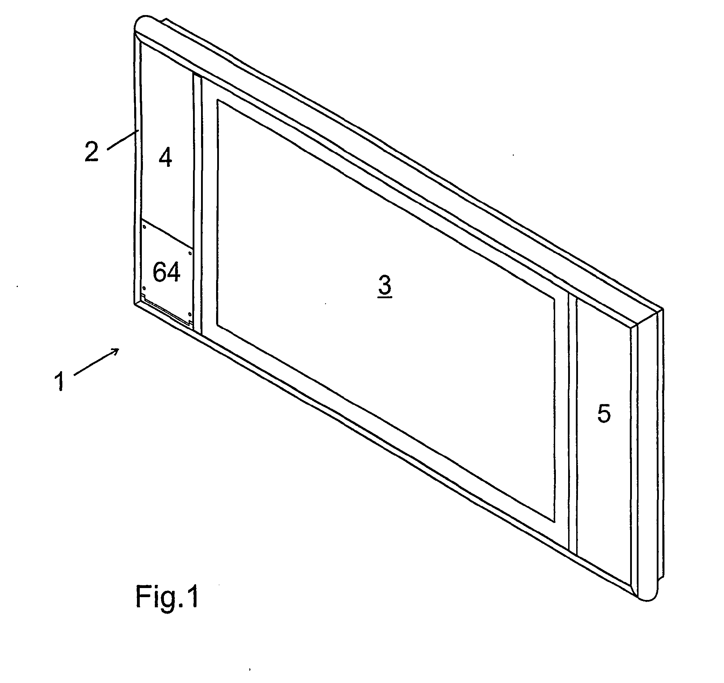

Die Figur 1 zeigt eine perspektivische Darstellung eines Multimedia-Wiedergabegeräts 1 mit einer Plasma-Flachanzeige 3 und zwei Lautsprechern 4, 5 auf beiden Seiten der Anzeige 3. Die Anzeige hat beispielsweise eine Diagonale von über 50 cm, vorzugsweise von über 70cm. Ein Rahmen 2, beispielsweise aus Kunststoff, Stahl oder vorzugsweise aus Aluminium, dient als Gehäuse für alle Komponenten des Fernsehgeräts und ist für die Wandmontage geeignet. Auf dieser Figur nicht dargestellte elektronische Komponenten, beispielsweise ein TV-Tuner, eine Video-Karte, ein PC mit einer Mutterkarte und einer oder mehreren Erweiterungskarten, sind auf einer oder mehreren Leiterplatinen im Gehäuse hinter und parallel zur Anzeige 3 angeordnet. Das Muftimedia-Wiedergabegerät wird vorzugsweise mit einer infraroten- oder Funk-Fernbedienung gesteuert und weist damit vorzugsweise keine sichtbaren Bedienungselemente auf. Der infrarote Sender-Empfänger ist beispielsweise im unteren Teil des Rahmens 2 angeordnet. Eine nicht reflektierende Glasplatte vor der Plasma-Anzeige 3 schirmt diese elektromagnetisch ab.

Das Multimedia-Wiedergabegerät weist ein oder mehrere Disklaufwerke auf, die an die innere Seite einer herausklappbaren Türe 64 montiert ist. Die Breite der Türe 64 entspricht der Breite der Abdeckung vor dem Lautsprecher 4, so dass sie direkt unter dieser Abdeckung montiert werden kann.

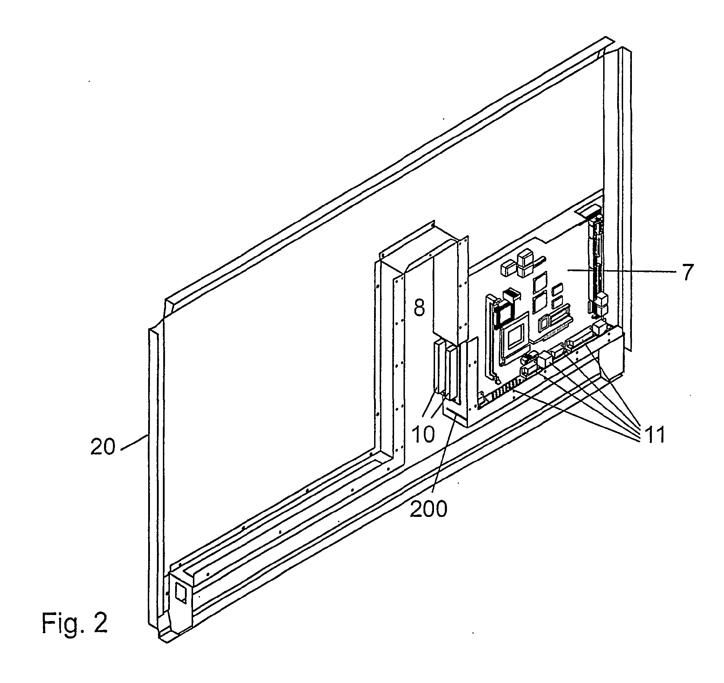

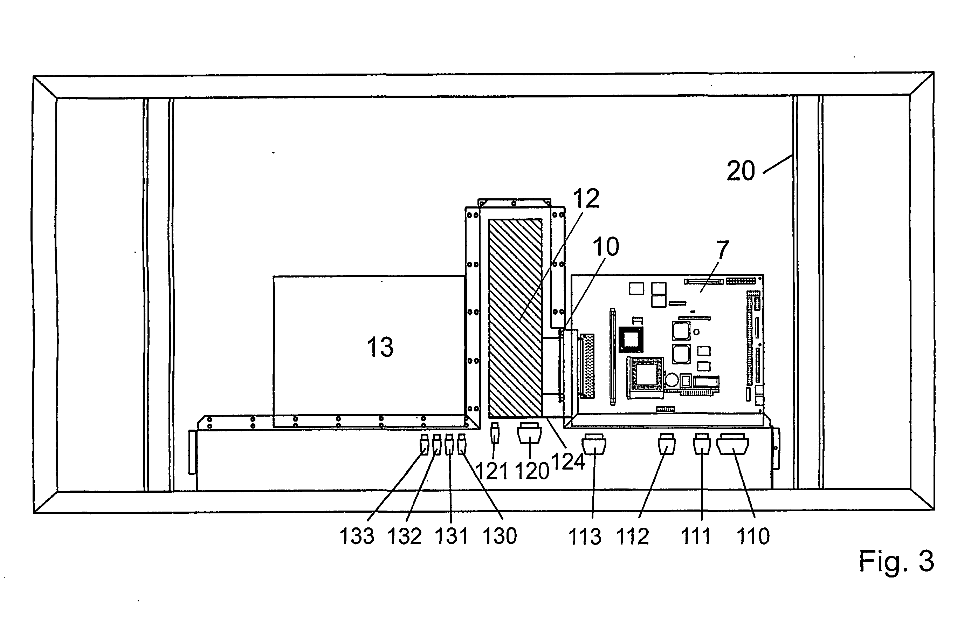

Die Figur 2 zeigt einen Teil des Gehäuses 2 des Multimedia-Wiedergabegeräts mit der Mutterkarte 7 eines PC-Rechners. Einige Komponenten dieser Anordnung sind besser sichtbar auf der Explosionsansicht der Figur 3, die zusammen mit der Figur 2 beschrieben wird.

Der auf der Figur 2 dargestellte Teil des Gehäuses weist eine Platte 20 auf, die an den Rahmen 2 zwischen den Lautsprechern 4 und 5 montiert wird, wie auf der Figur 3 ersichtlich. An diese Platte werden elektronische Komponenten des Geräts, unter anderem die Mutterkarte 7 des Rechners, die Erweiterungskarten 12 (Figur 3), die Video-Karte 13, die TV-Tuner-Karte (nicht dargestellt), usw., montiert. Die Platte dient ausserdem als elektromagnetische Abschirmung zwischen diesen elektronischen Komponenten und der auf der anderen Seite der Platte installierten Plasma-Anzeige.

Auf der Mutterkarte 7 befinden sich alle Komponenten eines PC-Rechners, unter anderem ein Mikroprozessor mit Chipset, Speichermodulen, einem Anschluss für die Video-Karte 13, usw. Ausserdem werden vorzugsweise Schnittstellen und Stecker 11 für verschiedene externe Anschlüsse 110-113 auf der Mutterkarte 7 vorgesehen, beispielsweise für einen parallelen und seriellen Anschluss, für USB-Stecker, für eine Ethernet oder Fast-Ethernet Verbindung, für eine Tastatur und Maus, usw. Erfindungsgemäss befinden sich alle notwendigen Stecker auf derselben Seite der Mutterkarte 7, die hinten im Gehäuse montiert wird. In einer bevorzugten Ausführungsform kann auch ein Leser von Karten im PC-Card Format und/oder ein Leser von Chipkarten auf der Mutterkarte 7 vorhanden sein, wobei die PC-Card-Karte beziehungsweise die Chipkarte auch auf der hinteren Seite der Mutterkarte eingeschoben wird.

Die Platte 20 wird so gebildet, dass sie einen Schacht 8 bildet, in welchen eine oder mehrere Erweiterungskarten 12 installiert werden können, beispielsweise Erweiterungskarten im ISA oder vorzugsweise im PCI-Format. Erfindungsgemäss werden diese Erweiterungskarten über eine oder mehrere Steckverbindungen 10 mit der Mutterkarte 7 verbunden, wobei diese Steckverbindungen auf einer anderen Seite der Mutterkarte als die benannten Stecker 11 für externe Anschlüsse angebracht sind. In einer ersten Variante sind die Steckverbindungen abgewinkelt, um eine Montage der Erweiterungskarten parallel zur Mutterkarte zu erlauben. In einer anderen Variante werden normale Steckverbindungen verwendet, die aber rechtwinklig zur Mutterkarte montiert sind.

Wie man es insbesondere auf der Figur 3 sehen kann, erstrecken sich somit die Erweiterungskarten 12 ausserhalb des durch die Platte 20 definierten Teils des Gehäuses, in welchem die Mutterkarte 7 und die Video-Karte 13 untergebracht sind. Dies hat den Vorteil, dass die Erweiterungskarten und die Mutterkarte somit voreinander thermisch und elektromagnetisch abgeschirmt sind. Ausserdem können die Erweiterungskarten 12 installiert beziehungsweise ersetzt werden, ohne dass der (nicht dargestellte) Deckel über dem Teil des Gehäuses, in welchem sich die Mutterkarte 7 befindet, geöffnet werden muss.

Die Erweiterungskarten 12 befinden sich somit parallel neben der benannten Mutterkarte. Es können wie auf der Figur 2 dargestellt mehrere (beispielsweise zwei) Steckverbindungen für zwei übereinander gelagerte Erweiterungskarten vorgesehen sein. Möglich wäre es aber auch, zwei oder mehr Erweiterungskarten nebeneinander auf derselben Ebene zu montieren.

Die üblichen verfügbaren Erweiterungskarten im PCI- oder ISA-Format verfügen über eine Rückenplatte 124, die das Eindringen von Staub innerhalb des Rechners verhindern soll. Wie man es auf der Figur 2 sehen kann, wird ein Schlitz in der Platte 20 vorgesehen, um das Ende dieser Rückenplatte einzunehmen und somit die Erweiterungskarten zu halten.

Die dargestellte Variante hat den zusätzlichen Vorteil, dass alle Stecker 110-113, 120-121 und 130-133 für externe Anschlüsse der Mutterkarte 7, der Erweiterungskarten 12 und der Videokarte 13 in einer Linie an der leicht zugänglichen unteren Seite des Geräts 1 angeordnet sind. Dies macht den Anschluss von Peripheriegeräten sehr einfach und vermeidet die Kreuzung von Kabeln. Ausserdem wird die Beschreibung der verschiedenen Stecker in der Dokumentation zum Multimedia-Gerät 1 stark vereinfacht. Die Stecker 110-133 sind auch zugänglich, wenn das Multimedia-Wiedergabegerät an eine Wand montiert ist.

Der Teil des Gehäuses über der Mutterkarte 7 und über der Videokarte 13 wird vorzugsweise mit einer Deckplatte bedeckt, die direkt an die passenden Löcher der Platte 20 geschraubt wird. Eine andere Deckplatte kann optional den Schacht 8 über den Erweiterungskarten 12 abdecken und somit diese Karten vor Stössen und vor Vandalismus schützen. Eine zusätzliche Deckplatte kann alle Stecker 110-133 schützen.

Als Erweiterungskarten 12 können beispielsweise Modem-Karten für den Anschluss des Geräts 1 an das Internet, DAB oder DVB-Karten (Digital Audio Broadcasting beziehungsweise Digital Video Broadcasting), usw. verwendet werden.

## Patentansprüche

1. Multimedia-Wiedergabegerät (1) mit folgenden Komponenten:
eine PC-Mutterkarte (7) mit einer Vielzahl von Slots (10) für - Erweiterungskarten (12),
eine Flachanzeige (3), um die von dem benannten PC erzeugten Bilddaten wiederzugeben,
mindestens ein Lautsprecher (4, 5),
ein TV-Tuner,
ein flaches Gehäuse (2) in welchem alle benannten Komponenten untergebracht sind,
**dadurch gekennzeichnet, dass** die benannte Mutterkarte (7) parallel hinter der benannten Anzeige (3) montiert ist,
und dass die benannten Slots (10) so montiert sind, dass sich die benannten Erweiterungskarten (12) parallel zur benannten Mutterkarte (7) und hinter der benannten Anzeige (3) befinden.

2. Multimedia-Wiedergabegerät gemäss dem vorhergehenden Anspruch, in welchem sich die benannten Erweiterungskarten (12) neben der benannten Mutterkarte (7) in einem Schacht (8) ausserhalb des benannten Gehäuses (2) befinden.

3. Multimedia-Wiedergabegerät gemäss dem vorhergehenden Anspruch, in welchem die benannte Mutterkarte (7) und mindestens eine der benannten Erweiterungskarten (12) mindestens einen Stecker (11) für Peripheriegeräte aufweisen, der ausserhalb des benannten Gehäuses (2) zugänglich ist, wobei die Stecker (11) der Mutterkarte (7) und die Stecker der Erweiterungskarte (12) in einer Linie angeordnet sind.

4. Multimedia-Wiedergabegerät gemäss dem vorhergehenden Anspruch, in welchem die benannten Stecker auch zugänglich sind, wenn das benannte Multimedia-Wiedergabegerät (1) an eine Wand montiert ist.

5. Multimedia-Wiedergabegerät gemäss einem der Ansprüche 3 oder 4, in welchem alle Stecker des benannten Multimedia-Wiedergabegeräts (1), die ausserhalb des Geräts zugänglich sind, nebeneinander angeordnet sind.

6. Multimedia-Wiedergabegerät gemäss einem der Ansprüche 2 bis 5, in welchem eine Deckplatte, die an dem benannten Gehäuse befestigt ist, vorgesehen ist, um den benannten Schacht (8) zu schützen.

7. Multimedia-Wiedergabegerät gemäss einem der vorhergehenden Ansprüche, in welchem mehrere benannte Erweiterungskarten (12) übereinander montiert werden können.

8. Multimedia-Wiedergabegerät gemäss einem der vorhergehenden Ansprüche, in welchem mehrere benannte Erweiterungskarten (12) nebeneinander montiert werden können.

9. Multimedia-Wiedergabegerät gemäss einem der vorhergehenden Ansprüche, in welchem eine Video-Karte (13) vorgesehen ist, welche sich parallel neben der benannten Mutterkarte befindet, und welche die benannten Bilddaten für die benannte Flachanzeige verarbeitet.

10. Multimedia-Wiedergabegerät gemäss einem der vorhergehenden Ansprüche, in weichem mindestens gewisse genannte Erweiterungs-Slots (10) im PCI-Format sind.

11. Fernsehgerät enthaltend ein Multimedia Wiedergabegerät gemäss einem der vorhergehenden Ansprüche, in welchem die benannte Flachanzeige eine Plasma-Anzeige ist.

12. Fernsehgerät enthaltend ein Multimedia Wiedergabegerät gemäss einem der Ansprüche 1 bis 10, in welchem die benannte Flachanzeige eine TFT-Anzeige ist.

## Claims

1. Multimedia reproduction unit (1) comprising the following components:
a PC mother card (7) provided with a multitude of slots (10) for expansion cards (12);
a flat panel display (3) for reproducing image data generated by said PC;
at least one loudspeaker (4, 5);
a TV tuner;
a flat housing (2), inside of which all of the aforementioned components are accommodated,
**characterised in that** said mother card (7) is parallelly mounted behind the display (3), and that said slots (10) are mounted in such a manner that said expansion cards (12) are arranged parallel to the mother card (7) and behind the display (3).

2. Multimedia reproduction unit (1) according to the preceding claim, in which said expansion cards (12) are located beside said mother card (7) within a shaft (8) outside said housing (2).

3. Multimedia reproduction unit (1) according to the preceding claim, in which said mother card (7) and at least one of said expansion cards (12) comprise at least one connector (11) for peripheral devices, which is accessible outside of the housing (2), whereas the connectors (11) of the mother card (7) and the connectors (11) of the expansion card (12) are arranged in one line.

4. Multimedia reproduction unit (1) according to the preceding claim, in which said connectors are still accessible, if said Multimedia reproduction unit (1) is mounted on a wall.

5. Multimedia reproduction unit (1) according one of the claims 3 or 4, in which all connectors of said Multimedia reproduction unit (1), which are accessible outside of the housing (2), are arranged side by side.

6. Multimedia reproduction unit (1) according one of the claims 2 to 5, in which a cover plate, which is mounted on said housing, is provided in order to protect said shaft (8) .

7. Multimedia reproduction unit (1) according to one of the preceding claims, in which a plurality of said expansion cards (12) can be mounted above one another.

8. Multimedia reproduction unit (1) according to one of the preceding claims, in which a plurality of said expansion cards (12) can be mounted side by side.

9. Multimedia reproduction unit (1) according to one of the preceding claims, in which a video card (13) is provided, which is arranged in parallel beside said mother card (7) and which processes said image data for said flat panel display.

10. Multimedia reproduction unit (1) according to one of the preceding claims, in which at least certain of said expansion slots (10) are in the PCI-format.

11. Television device comprising a Multimedia reproduction unit (1) according to one of the preceding claims, in which the flat panel display is a plasma-display.

12. Television device comprising a Multimedia reproduction unit (1) according to one of the claims 1 to 10, in which the flat panel display is a TFT-display.

## Revendications

1. Appareil de lecture multimédia (1) comprenant les composants suivants :
une carte mère de PC (7) avec une pluralité de fentes (10) pour des cartes d'extensions (12),
un écran plat (3), pour restituer les données d'images générées par ledit PC,
au moins un haut-parleur (4, 5),
un tuner TV,
un boîtier plat (2) dans lequel sont logés tous les composants,
**caractérisé en ce que** ladite carte mère (7) est montée parallèlement derrière ledit affichage (3),
et **en ce que** lesdites fentes (10) sont montées de sorte que lesdites cartes d'extension (12) se trouvent parallèlement à ladite carte mère (7) et derrière ledit affichage (3).

2. Appareil de lecture multimédia selon la revendication précédente, dans lequel lesdites cartes d'extension (12) se trouvent à côté de ladite carte mère (7) dans une cage (8) à l'extérieur dudit boîtier (2).

3. Appareil de lecture multimédia selon la revendication précédente, dans lequel ladite carte mère (7) et au moins l'une desdites cartes d'extension (12) présentent au moins un connecteur (11) pour des périphériques, lequel est accessible à l'extérieur dudit boîtier (2), les connecteurs (11) de la carte mère (7) et les connecteurs de la carte d'extension (12) étant disposés en ligne.

4. Appareil de lecture multimédia selon la revendication précédente, dans lequel lesdits connecteurs sont également accessibles quand ledit appareil de lecture multimédia (1) est fixé au mur.

5. Appareil de lecture multimédia selon l'une des revendications 3 ou 4, dans lequel tous les connecteurs de l'appareil de lecture multimédia (1) qui sont accessibles à l'extérieur de l'appareil sont disposés les uns à côté des autres.

6. Appareil de lecture multimédia selon l'une des revendications 2 à 5, dans lequel une plaque de recouvrement qui est fixée audit boîtier est prévue pour protéger ladite cage (8).

7. Appareil de lecture multimédia selon l'une des revendications précédentes dans lequel plusieurs dites cartes d'extension (12) peuvent être montées les unes au dessus des autres.

8. Appareil de lecture multimédia selon l'une des revendications précédentes dans lequel plusieurs dites cartes d'extension (12) peuvent être montées les unes à côté des autres.

9. Appareil de lecture multimédia selon l'une des revendications précédentes dans lequel une carte vidéo (13) est prévue qui se trouvent parallèlement à côté de ladite carte mère et qui traite lesdites données d'image pour ledit écran plat.

10. Appareil de lecture multimédia selon l'une des revendications précédentes dans lequel au moins certaines dites fentes d'extension (10) sont au format PCI.

11. Télévision contenant un appareil de lecture multimédia selon l'une des revendications précédentes dans lequel ledit écran plat est un écran plasma.

12. Télévision contenant un appareil de lecture multimédia selon l'une des revendications 1 à 10 dans lequel ledit écran plat est un écran TFT.
